# EUROPEAN PATENT APPLICATION

(11) **EP 4 557 312 A1**
(43) Date of publication of application: **21.05.2025**
(21) Application number: 22923537.9
(22) Date of filing: 14.12.2022
(51) Int. Cl.: G21C 13/032, G21C 13/06

(54) **SUPPORTING PIECE AND DRIVING MECHANISM PIPE BASE APPARATUS**

(30) Priority: 06.09.2022 CN 202211084877
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: HUANG, Jianxue, Shenzhen, Guangdong 518124 (CN); XIONG, Yi, Shenzhen, Guangdong 518124 (CN); RAN, Xiaobing, Shenzhen, Guangdong 518124 (CN); LI, Yuezhong, Shenzhen, Guangdong 518124 (CN); LIU, Yanwu, Shenzhen, Guangdong 518124 (CN); WU, Xianmin, Shenzhen, Guangdong 518124 (CN); XIAO, Wei, Shenzhen, Guangdong 518124 (CN); CHEN, Qiuying, Shenzhen, Guangdong 518124 (CN); YANG, Jingchao, Shenzhen, Guangdong 518124 (CN); HU, Dafen, Shenzhen, Guangdong 518124 (CN); WU, Hebei, Shenzhen, Guangdong 518124 (CN); XU, Xiao, Shenzhen, Guangdong 518124 (CN)
(74) Representative: Westphal, Mussgnug & Partner, Patentanwälte mbB
(86) International application number: PCT/CN2022/139140
(87) International publication number: WO 2023/142751

(57) **Abstract**

Supporting piece and driving mechanism pipe base apparatus Disclosed in the present invention are a supporting piece and a driving mechanism pipe base apparatus. The supporting piece comprises a hollow ring body used for being embedded in a driving mechanism pipe base and for a heat sleeve to penetrate through. A first end of the hollow ring body in the axial direction is provided with a connecting part used for being connected to the driving mechanism pipe base and for limiting relative movements in the axial direction and the radial direction. The inner wall surface of a second end of the hollow ring body in the axial direction is a conical surface and is used for supporting the heat sleeve. The supporting piece can ensure that the heat sleeve does not continue to wear the driving mechanism pipe base body. The overall wear life of the driving mechanism pipe base is prolonged, the operation and maintenance requirements of the driving mechanism pipe base are reduced or eliminated, and the unit safety and cost effectiveness are improved. Moreover, the supporting piece has the advantages of being long in service life, and resistant to abrasion, and replaceable: the supporting piece can be disassembled and replaced after experiencing excessive wear, and the integrity of the pressure-bearing structure of the pipe base is not affected.

## Description

### FIELD

The present disclosure relates to the technical field of a control rod drive mechanism (CRDM) adaptor of a pressurized water reactor nuclear power plant, in particular to a supporting piece and a CRDM adaptor apparatus.

### BACKGROUND

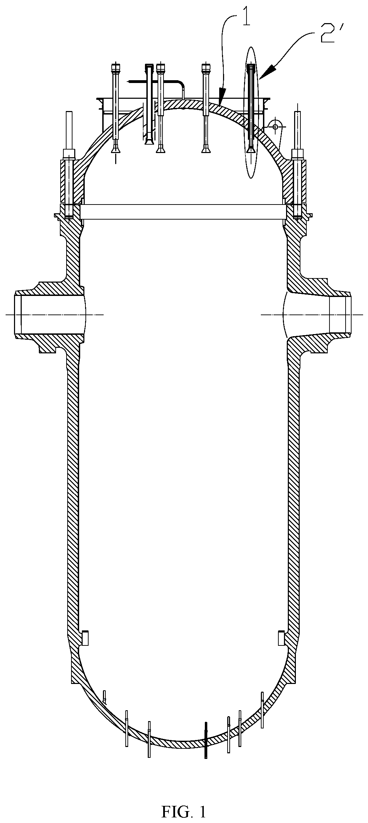

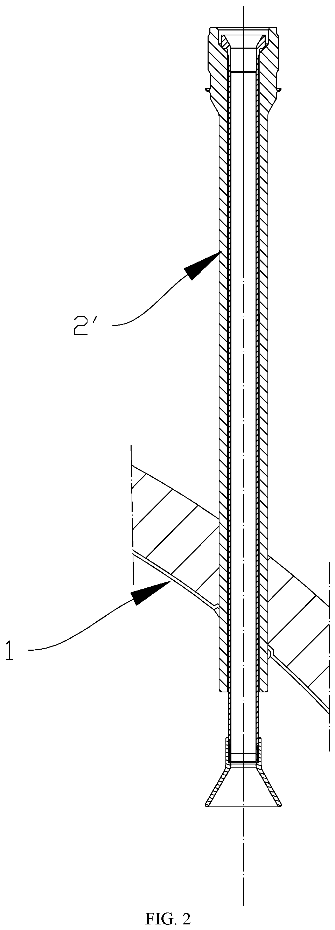

As shown in Figure 1, the existing CRDM adaptor 2' is located on the head 1 of the reactor vessel to support the drive rod 4 and the thermal sleeve 3. As shown in Figures 2, 3, and 4, the thermal sleeve 3 is within the existing CRDM adaptor 2' and sits on the cone-shaped surface 21' of the adaptor by its weight, resulting in wear under the action of the fluid in the reactor, including the thermal sleeve flange 31 and the cone-shaped surface 21' of the adaptor. In severe cases, the wear may cause the thermal sleeve flange 31 to be separated from the sleeve 3, and foreign matter will be formed in the existing CRDM adaptor 2' to affect the movement of the drive rod 4, resulting in the drive rod 4 jamming; at the same time, the cone-shaped surface 21' of the adaptor is depressed due to wear, which makes the existing CRDM adaptor 2' wear continuously after installing the new sleeve 3, and finally causes the existing CRDM adaptor 2' to lose its pressure boundary function.

The existing first usually removes the visibly worn thermal sleeve, installs a new thermal sleeve on the worn CRDM adaptor 2, and does not treat the worn CRDM adaptor, which will make the CRDM adaptor continue to wear, and is impossible to ensure that the remaining life of the CRDM adaptor can meet the operation lifetime requirements of nuclear power plants after installing the new thermal sleeve.

Secondly, the integrated CRDM adaptor is adopted, and the abrasion resistance of local positions is not strengthened, so the abrasion resistance of the material used for the CRDM adaptor is poor, and the life of the CRDM adaptor after wear can not meet the operation lifetime requirements of nuclear power plants.

### SUMMARY

The technical problem to be solved by the present disclosure is aiming at at least one defect of the related technology mentioned in the above background technology: the abrasion resistance of the CRDM adaptor is not strengthened, and the service life of the CRDM adaptor after being worn can not meet the operation lifetime requirements of a nuclear power plant, provide a supporting piece and a CRDM adaptor apparatus.

The technical scheme adopted by the present disclosure to solve the technical problems is as follows: constructing a supporting piece comprising a hollow ring body for being embedded in the CRDM adaptor and for a thermal sleeve to penetrate through;

Wherein a first end of the hollow ring body in the axial direction is provided with a connecting part used for being connected to the CRDM adaptor and for limiting the relative movement in the axial direction and the radial direction;

The inner wall surface of the second end of the hollow ring body in the axial direction is a conical surface that supports the thermal sleeve.

Preferably, in the supporting piece according to the present disclosure, the inner wall surface of the hollow ring body is provided with a dismounting part for dismounting or mounting.

Preferably, in the supporting piece according to the present disclosure, the dismounting part is a first ring groove for clamping.

Preferably, in the supporting piece according to the present disclosure, the flanges at both ends of the first ring groove in the axial direction are first chamfers respectively.

Preferably, in the supporting piece according to the present disclosure, the hollow ring body or the conical surface is made of a material with better abrasion resistance than the CRDM adaptor.

Preferably, in the supporting piece according to the present disclosure, the connecting part is an annular elastic clamping part that extends axially from the first end face of the hollow ring body and forms an edge with the first end face.

Preferably, in the supporting piece according to the present disclosure, the clamping part is a lip structure.

Preferably, in the supporting piece according to the present disclosure, at least two grooves opening from the second end to the first end of the hollow ring body are provided in the circumferential direction of the clamping part.

Preferably, in the supporting piece according to the present disclosure, the connecting part is a second chamfer provided on the inner peripheral edge of the first end face of the hollow ring body for welding.

Preferably, in the supporting piece according to the present disclosure, the connecting part is a second ring groove arranged on the inner wall surface of the first end of the hollow ring body for welding.

Preferably, in the supporting piece according to the present disclosure, the connecting part is a third ring groove arranged on the first end face of the hollow ring body for welding.

Preferably, in the supporting piece according to the present disclosure, the inner wall surface of the first end of the hollow ring body is provided with a first step, and the inner diameter of the first step is larger than the inner diameter of the hollow ring body.

The present disclosure also constructs a CRDM adaptor apparatus comprising a CRDM adaptor and a supporting piece described in any one of the above;

The hollow ring body is embedded in the CRDM adaptor, and the CRDM adaptor is provided with a connected part that is mutually matched with the connecting part.

Preferably, in the CRDM adaptor apparatus of the present disclosure, the inner wall surface of the top of the CRDM adaptor is provided with a second step, and the inner diameter of the second step is larger than the inner diameter of the CRDM adaptor;

The hollow ring body is embedded in the CRDM adaptor, the outer diameter of the hollow ring body is basically equal to the inner diameter of the second step, the inner diameter of the hollow ring body is equal to the inner diameter of the CRDM adaptor, and the end face of the first end of the hollow ring body abuts against the plane of the second step;

The connected part is arranged on the second step or the inner wall surface where the inner diameter of the CRDM adaptor is located.

The present disclosure also constructs a CRDM adaptor apparatus comprising a CRDM adaptor and the above-mentioned supporting piece;

The hollow ring body and the clamping part are embedded in the CRDM adaptor, and the CRDM adaptor is provided with a fourth ring groove engaging with the clamping part.

Preferably, in the CRDM adaptor apparatus of the present disclosure, the inner wall surface of the top of the CRDM adaptor is provided with a second step, and the inner diameter of the second step is larger than the inner diameter of the CRDM adaptor;

The hollow ring body is embedded in the CRDM adaptor, the outer diameter of the hollow ring body is basically equal to the inner diameter of the second step, and the end face of the first end of the hollow ring body abuts against the plane of the second step, and the inner diameter of the clamping part is equal to the inner diameter of the CRDM adaptor;

The fourth ring groove is arranged on the inner wall surface where the inner diameter of the CRDM adaptor is located.

Preferably, in the CRDM adaptor apparatus of the present disclosure, the outer diameter of the lip of the clamping part is larger than the outer diameter of the flange of the fourth ring groove.

The present disclosure also constructs a CRDM adaptor apparatus comprising a CRDM adaptor and the above-mentioned supporting piece;

The hollow ring body is embedded in the CRDM adaptor, and the CRDM adaptor is provided with a third chamfer, and the third chamfer and the second chamfer are used for welding.

Preferably, in the CRDM adaptor apparatus of the present disclosure, the inner wall surface of the top of the CRDM adaptor is provided with a second step, and the inner diameter of the second step is larger than the inner diameter of the CRDM adaptor;

The hollow ring body is embedded in the CRDM adaptor, the outer diameter of the hollow ring body is basically equal to the inner diameter of the second step, the inner diameter of the hollow ring body is equal to the inner diameter of the CRDM adaptor, and the end face of the first end of the hollow ring body abuts against the plane of the second step;

The third chamfer is arranged at the edge of the second step.

The present disclosure also constructs a CRDM adaptor apparatus comprising a CRDM adaptor and the above-mentioned supporting piece;

The hollow ring body is embedded in the CRDM adaptor, and the CRDM adaptor is provided with a fifth ring groove, and the fifth ring groove and the second ring groove are used for welding.

Preferably, in the CRDM adaptor apparatus of the present disclosure, the inner wall surface of the top of the CRDM adaptor is provided with a second step, and the inner diameter of the second step is larger than the inner diameter of the CRDM adaptor;

The hollow ring body is embedded in the CRDM adaptor, the outer diameter of the hollow ring body is basically equal to the inner diameter of the second step, the inner diameter of the hollow ring body is equal to the inner diameter of the CRDM adaptor, and the end face of the first end of the hollow ring body abuts against the plane of the second step;

The fifth ring groove is arranged on the inner wall surface where the inner diameter of the CRDM adaptor is located.

The present disclosure also constructs a CRDM adaptor apparatus comprising a CRDM adaptor and the above-mentioned supporting piece;

The hollow ring body is embedded in the CRDM adaptor, and the CRDM adaptor is provided with a sixth ring groove corresponding to the third ring groove, and the sixth ring groove and the third ring groove are used for welding.

Preferably, in the CRDM adaptor apparatus of the present disclosure, the inner wall surface of the top of the CRDM adaptor is provided with a second step, and the inner diameter of the second step is larger than the inner diameter of the CRDM adaptor ;

The hollow ring body is embedded in the CRDM adaptor, the outer diameter of the hollow ring body is basically equal to the inner diameter of the second step, the inner diameter of the hollow ring body is equal to the inner diameter of the CRDM adaptor, and the end face of the first end of the hollow ring body abuts against the plane of the second step;

The sixth ring groove is arranged on the plane of the second step.

Preferably, in the CRDM adaptor apparatus of the present disclosure, a third step is arranged on the inner wall surface where the inner diameter of the CRDM adaptor is located, and the third step and the first step on the inner wall surface of the first end of the hollow ring body form a seventh ring groove;

The inner diameter of the seventh ring groove is larger than the inner diameter of the CRDM adaptor.

By implementing the present disclosure, the present disclosure has the following beneficial effects:

The present disclosure discloses a supporting piece comprising a hollow ring body used for being embedded in a CRDM adaptor and for a thermal sleeve to penetrate through, and the hollow ring body and the CRDM adaptor are connected by necessary mechanical connection or welding to form a whole with sufficient strength. Wherein the CRDM adaptor bears the pressure boundary function, and the hollow ring body bears the thermal sleeve supporting function and the abrasion resistance function, so that the thermal sleeve can not continue to wear the CRDM adaptor body, the overall wear life of the CRDM adaptor is prolonged, the operation and maintenance requirements of the CRDM adaptor are reduced or canceled, and the safety and economy of the unit are improved.

Moreover, the supporting piece has the advantages of long service life, abrasion resistance, and replacement. The supporting piece can be disassembled and replaced after excessive wear without affecting the integrity of the pressure-bearing structure of the adaptor.

In addition, the supporting piece can be used in power plants already in operation and power plants under construction, and the supporting piece scheme can be used to repair the in-service units, which can ensure the structure returns to the original design and avoid the influence of the drive line function.

### BRIEF DESCRIPTION OF THE DRAWINGS

The present disclosure will be further described with reference to the attached drawings and examples, in which:
Figure 1 is a structural schematic diagram of a typical reactor pressure vessel;
Figure 2 is a schematic diagram of the existing CRDM adaptor apparatus;
Figure 3 is a structural schematic diagram of the existing CRDM adaptor, thermal sleeve, and drive rod;
Figure 4 is a schematic view of the wear of the existing CRDM adaptor;
Figure 5 is a structural schematic diagram of a supporting piece in a third embodiment of the present disclosure;
Figure 6 is a structural schematic diagram of the explosion section of a supporting piece and a CRDM adaptor in a fourth embodiment of the present disclosure;
Figure 7 is a structural schematic diagram of the supporting piece and the CRDM adaptor after installation in a fourth embodiment of the present disclosure;
Figure 8 is a structural schematic diagram of the lip and the flange of the fourth ring groove after installation in a fourth embodiment of the present disclosure;
Figure 9 is a structural schematic diagram of a supporting piece in a fifth embodiment of the present disclosure;
Figure 10 is a structural schematic diagram of the explosion section of the supporting piece and the CRDM adaptor in a sixth embodiment of the present disclosure;
Figure 11 is a structural schematic diagram of the supporting piece and the CRDM adaptor after installation in a sixth embodiment of the present disclosure;
Figure 12 is a structural schematic diagram of a supporting piece in a seventh embodiment of the present disclosure;
Figure 13 is a structural schematic diagram of the explosion section of the supporting piece and the CRDM adaptor in an eighth embodiment of the present disclosure;
Figure 14 is a structural schematic diagram of the supporting piece and the CRDM adaptor after installation in an eighth embodiment of the present disclosure;
Figure 15 is a structural schematic diagram of a supporting piece in a ninth embodiment of the present disclosure;
Figure 16 is a structural schematic diagram of the explosion section of the supporting piece and the CRDM adaptor in a tenth embodiment of the present disclosure; and
Figure 17 is a structural schematic diagram of the supporting piece and the CRDM adaptor after installation in a tenth embodiment of the present disclosure.

### DETAILED DESCRIPTION

In order to have a clearer understanding of the technical features, purposes, and effects of the present disclosure, specific embodiments of the present disclosure will now be described in detail with reference to the attached drawings.

It should be noted that the flowchart shown in the attached drawings is only an exemplary explanation, and it is not necessary to include all the contents and operations/steps, and it is not necessary to execute them in the described order. For example, some operations/steps can be decomposed, while others can be merged or partially merged, so the actual execution order may change according to the actual situation.

The block diagrams shown in the attached drawings are only functional entities and do not necessarily correspond to physically independent entities. That is, these functional entities may be implemented in the form of software, or in one or more hardware modules or integrated circuits, or in different networks and/or processor apparatuses and/or microcontroller apparatuses.

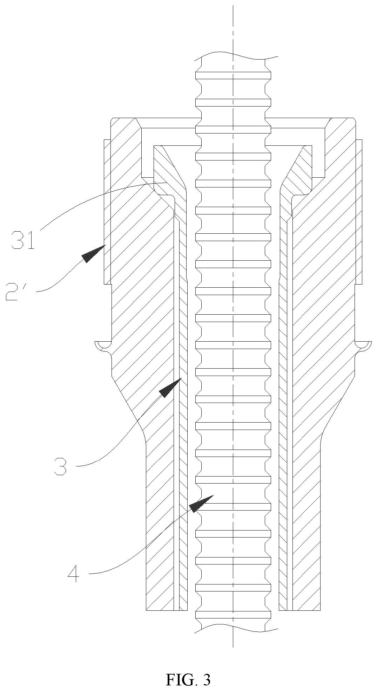

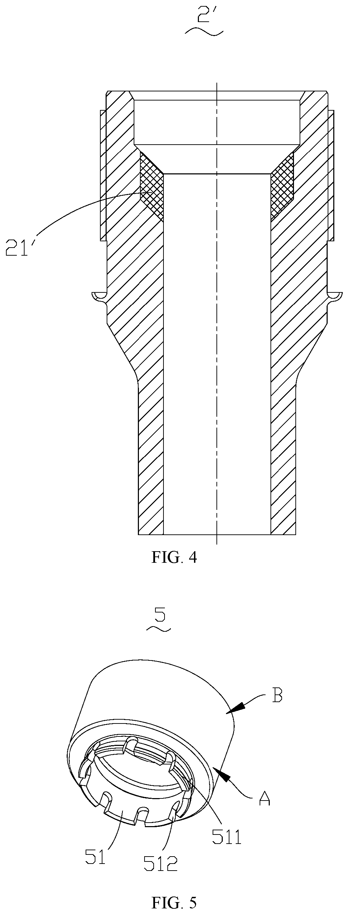

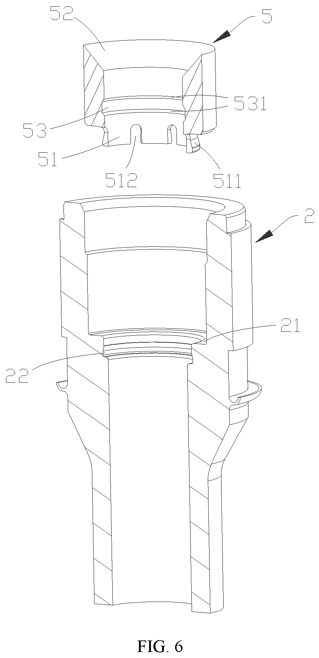

In a first embodiment, referring to Figure 5 and Figure 6, the present disclosure discloses a supporting piece, which includes a hollow ring body 5 for being embedded in a CRDM adaptor 2 and for a thermal sleeve 3 (refer to Figure 3) penetrate through.

A first end A of the hollow ring body 5 in the axial direction is provided with a connecting part used for being connected to the CRDM adaptor 2 and for limiting the relative movement in the axial direction and the radial direction. The inner wall surface of a second end B of the hollow ring body 5 in the axial direction is a conical surface 52 to support the thermal sleeve 3.

In this embodiment, since the hollow ring body 5 is completely embedded in the CRDM adaptor 2, to facilitate disassembly and installation, the inner wall surface of the hollow ring body 5 is provided with a dismounting part 53 for dismounting or mounting. Preferably, the dismounting part 53 is arranged closer to the first end A than the second end B of the hollow ring 5.

For example, the dismounting part 53 is a first ring groove for clamping, and the flanges at both ends of the first ring groove in the axial direction are first chamfers 531 respectively.

In addition, because the hollow ring body 5 is used for supporting the thermal sleeve 3 and rubs against the thermal sleeve 3, the material of the hollow ring body 5 is the same as the material of the CRDM adaptor 2, or the whole hollow ring body 5 or at least the conical surface 52 is made of a material with more abrasion resistance than a material of the CRDM adaptor 2, which has a higher abrasion resistance of the thermal sleeve 3, which can visibly prolong the service life of the CRDM adaptor 2, reduce or cancel the operation and maintenance requirement of the CRDM adaptor 2, and improve the safety and economy of the unit.

In a second embodiment, referring to Figures 5 and 6, the present disclosure discloses a CRDM adaptor apparatus, which is used in a pressurized water reactor nuclear power plant. The CRDM adaptor apparatus includes a CRDM adaptor 2 and the supporting piece described in the first embodiment, and will not be described here again. Wherein, the hollow ring body 5 is embedded in the CRDM adaptor 2, and the CRDM adaptor 2 is provided with a connected part that is mutually matched with the connecting part.

In this embodiment, the inner wall surface of the top of the CRDM adaptor 2 is provided with a second step 21, and the inner diameter of the second step 21 is larger than the inner diameter of the CRDM adaptor 2.

The hollow ring body 5 is embedded in the CRDM adaptor 2, and the outer diameter of the hollow ring body 5 is basically equal to the inner diameter at the second step 21. For example, a small clearance fit or a slight interference fit is adopted to ensure that the hollow ring body 5 does not move visibly laterally in the CRDM adaptor 2. Moreover, the inner diameter of the hollow ring body 5 is equal to the inner diameter of the CRDM adaptor 2, and the end face of the first end A of the hollow ring body 5 abuts against the plane of the second step 21.

The connected part is arranged on the second step 21 or on the inner wall surface where the inner diameter of the CRDM adaptor 2 is located.

In a third embodiment, as shown in Figures 5 and 6, the present disclosure discloses a supporting piece, which includes the contents of the first embodiment, and will not be repeated here. Wherein, the connecting part is an annular elastic clamping part 51 extending from the end face of the first end A of the hollow ring body 5 in the axial direction and forming a step with the end face of the first end A.

In this embodiment, the clamping part 51 is a lip structure, and the inner diameter of the clamping part 51 is equal to the inner diameter of the hollow ring body 5.

Moreover, in order to ensure the smooth installation of the lip, at least two grooves 512 are formed in the circumferential direction of the clamping part 51, which are open from the second end B to the first end A of the hollow ring body 5. Preferably, pluralities of grooves 512 are included, and the grooves 512 are evenly spaced in the circumferential direction of the connecting part.

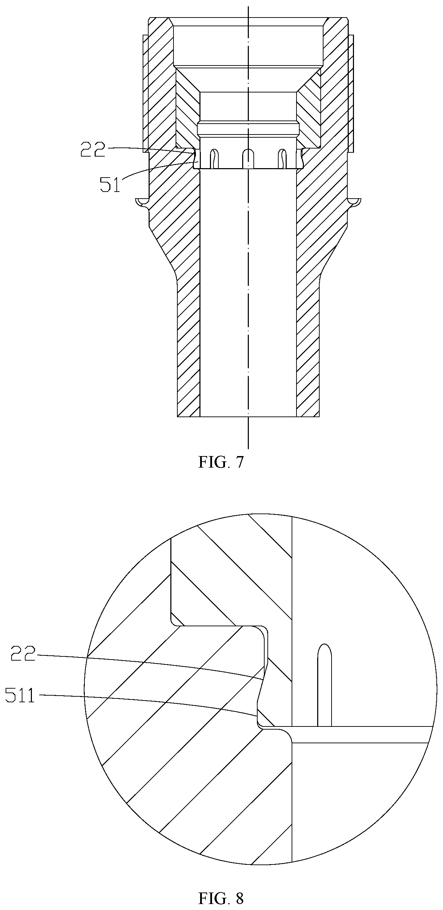

In a fourth embodiment, as shown in Figures 6 to 8, the present disclosure discloses a CRDM adaptor apparatus, which is used in a pressurized water reactor nuclear power plant. The CRDM adaptor apparatus includes a CRDM adaptor 2 and the supporting piece described in the third embodiment, and will not be described in detail here. The hollow ring body 5 and the clamping part 51 are embedded in the CRDM adaptor 2, and the CRDM adaptor 2 is provided with a fourth ring groove 22 that is engaged with the clamping part 51.

In this embodiment, the inner wall surface of the top of the CRDM adaptor 2 is provided with a second step 21, and the inner diameter of the second step 21 is larger than the inner diameter of the CRDM adaptor 2.

The hollow ring body 5 is embedded in the CRDM adaptor 2, and the outer diameter of the hollow ring body 5 is basically equal to the inner diameter at the second step 21. For example, a small clearance fit or a slight interference fit is adopted to ensure that the hollow ring body 5 does not move visibly laterally in the CRDM adaptor 2. The end face of the first end A of the hollow ring body 5 abuts against the plane of the second step 21, and the inner diameter of the clamping part 51 is equal to the inner diameter of the CRDM adaptor 2. The fourth ring groove 22 is arranged on the inner wall surface where the inner diameter of the CRDM adaptor 2 is located.

In this embodiment, in order to ensure that lip 511 of the clamping part 51 will not loosen after being clamped into the fourth ring groove 22, the outer diameter of lip 511 of the clamping part 51 is larger than the outer diameter of the flange of the fourth ring groove 22.

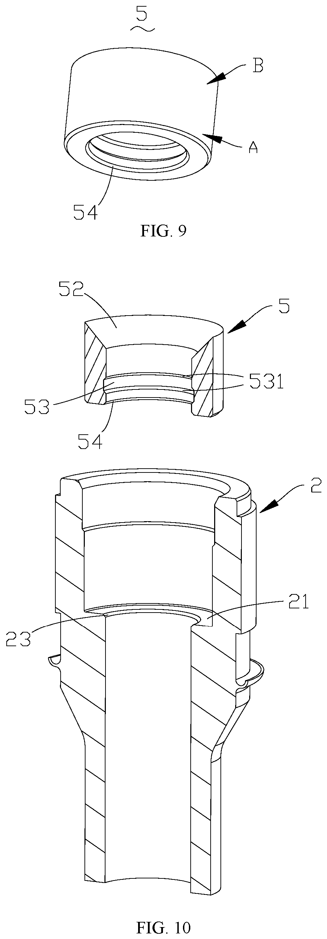

In a fifth embodiment, as shown in Figures 9 and 10, the present disclosure discloses a supporting piece, including the contents of the first embodiment described above, which will not be repeated here. The connecting part is a second chamfer 54 for welding, which is arranged on the inner peripheral edge of the end face of the first end A of the hollow ring body 5.

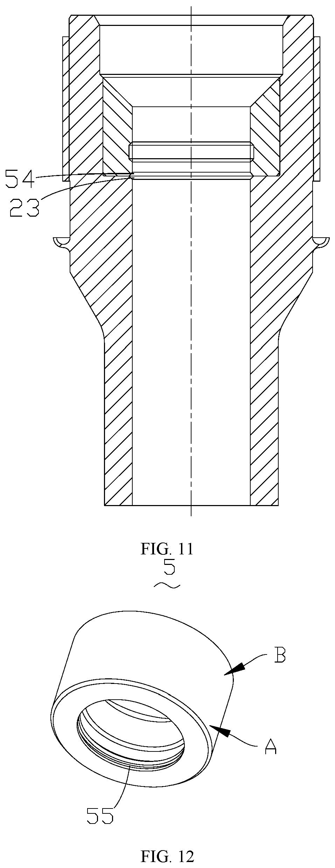

In a sixth embodiment, as shown in Figures 10 and 11, the present disclosure discloses a CRDM adaptor apparatus, which is used in a pressurized water reactor nuclear power plant. The adaptor apparatus includes a CRDM adaptor 2 and the supporting piece described in the fifth embodiment, and will not be described in detail here. Wherein, the hollow ring body 5 is embedded in the CRDM adaptor 2, and the CRDM adaptor 2 is provided with a third chamfer 23, and the third chamfer 23 and the second chamfer 54 are used for welding, for example, spot welding for anti-loosening is carried out by wire filling or self-melting.

In this embodiment, the inner wall surface of the top of the CRDM adaptor 2 is provided with a second step 21, and the inner diameter of the second step 21 is larger than the inner diameter of the CRDM adaptor 2.

The hollow ring body 5 is embedded in the CRDM adaptor 2, and the outer diameter of the hollow ring body 5 is basically equal to the inner diameter at the second step 21. For example, a small clearance fit or a slight interference fit is adopted to ensure that the hollow ring body 5 does not move visibly laterally in the CRDM adaptor 2. Moreover, the inner diameter of the hollow ring body 5 is equal to the inner diameter of the CRDM adaptor 2, and the end face of the first end A of the hollow ring body 5 abuts against the plane of the second step 21. A third chamfer 23 is provided at the edge of the second step 21.

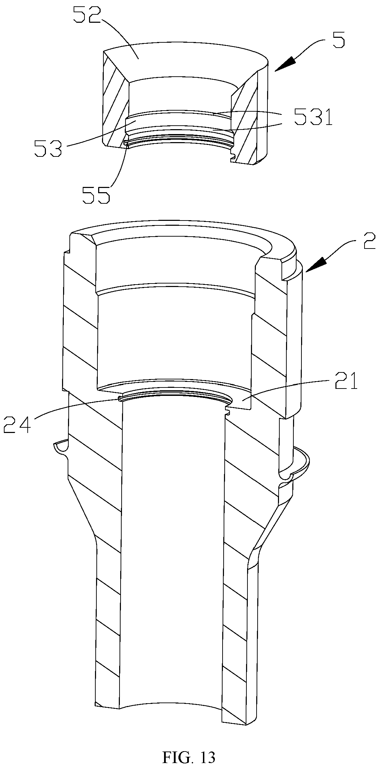

In a seventh embodiment, as shown in Figures 12 and 13, the present disclosure discloses a supporting piece, including the contents of the first embodiment described above, which will not be repeated here. Wherein the connecting part is a second ring groove 55 for welding, which is arranged on the inner wall surface of the first end A of the hollow ring body 5.

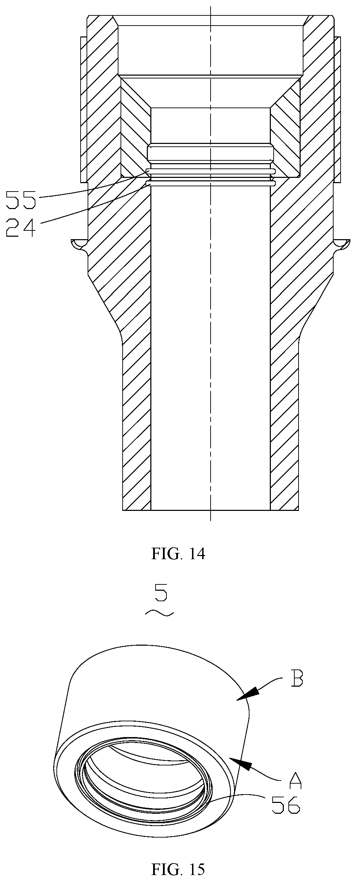

In an eighth embodiment, as shown in Figures 13 and 14, the present disclosure discloses a CRDM adaptor apparatus, which is used in a pressurized water reactor nuclear power plant. The CRDM adaptor apparatus includes a CRDM adaptor 2 and the supporting piece described in the seventh embodiment, and will not be described in detail here. Wherein, the hollow ring body 5 is embedded in the CRDM adaptor 2, and the CRDM adaptor 2 is provided with a fifth ring groove 24, and the fifth ring groove 24 and the second ring groove 55 are used for welding, such as continuous or intermittent welding for anti-loosening by self-melting.

In this embodiment, the inner wall surface of the top of the CRDM adaptor 2 is provided with a second step 21, and the inner diameter of the second step 21 is larger than the inner diameter of the CRDM adaptor 2.

The hollow ring body 5 is embedded in the CRDM adaptor 2, and the outer diameter of the hollow ring body 5 is basically equal to the inner diameter at the second step 21. For example, a small clearance fit or a slight interference fit is adopted to ensure that the hollow ring body 5 does not move visibly laterally in the CRDM adaptor 2. Moreover, the inner diameter of the hollow ring body 5 is equal to the inner diameter of the CRDM adaptor 2, and the end face of the first end A of the hollow ring body 5 abuts against the plane of the second step 21. The fifth ring groove 24 is arranged on the inner wall surface where the inner diameter of the CRDM adaptor 2 is located.

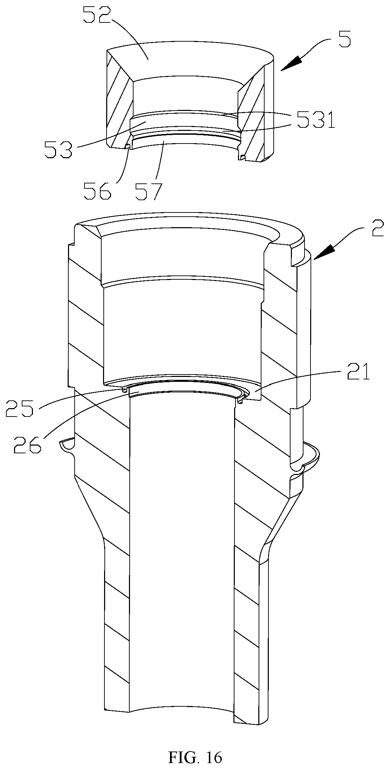

In a ninth embodiment, as shown in Figures 15 and 16, the present disclosure discloses a supporting piece, including the contents of the first embodiment described above, which will not be repeated here. The connecting part is a third ring groove 56 for welding, which is arranged on the end face of the first end A of the hollow ring body 5.

In this embodiment, the inner wall surface of the first end A of the hollow ring body 5 is provided with a first step 57, and the inner diameter of the first step 57 is larger than the inner diameter of the hollow ring body 5.

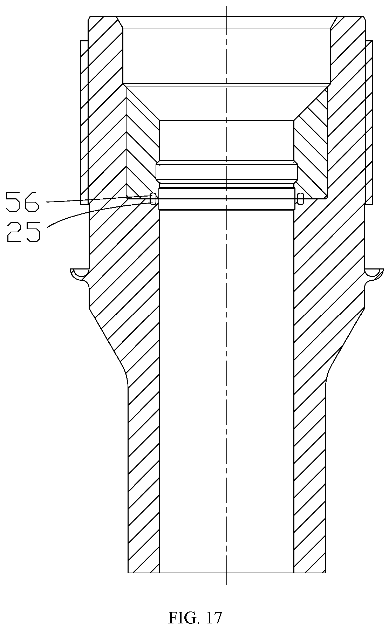

In a tenth embodiment, as shown in Figures 16 and 17, the present disclosure discloses a CRDM adaptor apparatus, which is used in a pressurized water reactor nuclear power plant. The CRDM adaptor apparatus includes a CRDM adaptor 2 and the supporting piece described in the ninth embodiment, and will not be described in detail here. Wherein, the hollow ring body 5 is embedded in the CRDM adaptor 2, and the CRDM adaptor 2 is provided with a sixth ring groove 25 corresponding to a third ring groove 56, and the sixth ring groove 25 and the third ring groove 56 are used for welding, such as continuous or intermittent welding for anti-loosening by self-melting.

In this embodiment, the inner wall surface of the top of the CRDM adaptor 2 is provided with a second step 21, and the inner diameter of the second step 21 is larger than the inner diameter of the CRDM adaptor 2.

The hollow ring body 5 is embedded in the CRDM adaptor 2, and the outer diameter of the hollow ring body 5 is basically equal to the inner diameter at the second step 21. For example, a small clearance fit or a slight interference fit is adopted to ensure that the hollow ring body 5 does not move visibly laterally in the CRDM adaptor 2. Moreover, the inner diameter of the hollow ring body 5 is equal to the inner diameter of the CRDM adaptor 2, and the end face of the first end A of the hollow ring body 5 abuts against the plane of the second step 21. The sixth ring groove 25 is arranged on the plane of the second step 21.

In this embodiment, a third step 26 is provided on the inner wall surface where the inner diameter of the CRDM adaptor 2 is located. The third step 26 and the first step 57 on the inner wall surface of the first end A of the hollow ring body 5 form a seventh ring groove, and the inner diameter of the seventh ring groove is larger than the inner diameter of the CRDM adaptor 2.

In addition, in any of the above embodiments, the CRDM adaptor 2 is made of stainless steel, which has higher hardness.

By implementing the present disclosure, the present disclosure has the following beneficial effects:

The present disclosure discloses a supporting piece comprising a hollow ring body for being embedded in a CRDM adaptor and for a thermal sleeve to penetrate through, and the hollow ring body and the CRDM adaptor are connected by necessary mechanical connection or welding to form a whole with sufficient strength. Wherein the CRDM adaptor bears the pressure boundary function, and the hollow ring body bears the thermal sleeve supporting function and the abrasion resistance function so that the thermal sleeve can not continue to wear the CRDM adaptor body, the overall wear life of the CRDM adaptor is prolonged, the operation and maintenance requirements of the CRDM adaptor are reduced or canceled, and the safety and economy of the unit are improved.

Moreover, the supporting piece has the advantages of long service life, abrasion resistance, and replacement. The supporting piece can be disassembled and replaced after excessive wear without affecting the integrity of the pressure-bearing structure of the adaptor.

In addition, the supporting piece can be used in power plants already in operation and power plants under construction, and the supporting piece scheme can be used to repair the in-service units, which can ensure the structure returns to the original design and avoid the influence of the drive line function.

It can be understood that the above embodiment only expresses the preferred embodiment of the present disclosure, and its description is more specific and detailed, but it cannot be understood as limiting the patent scope of the present disclosure; it should be pointed out that for ordinary technicians in this field, without departing from the concept of the present disclosure, the above embodiments or technical features can be freely combined, and several modifications and improvements can be made, which are within the protection scope of the present disclosure, that is, the embodiment described in "some embodiments" can be freely combined with any of the above embodiments; Therefore, all equivalent transformations and modifications made with the scope of the claims of the present disclosure should belong to the scope of the claims of the present disclosure.

## Claims

1. A supporting piece, comprising a hollow ring body (5) for being embedded in a CRDM adaptor (2) and for a thermal sleeve (3) to penetrate through;
wherein a first end of the hollow ring body (5) in the axial direction is provided with a connecting part used for being connected to the CRDM adaptor (2) and for limiting the relative movement in the axial direction and the radial direction;
the inner wall surface of a second end of the hollow ring body (5) in the axial direction is a conical surface (52) for supporting the thermal sleeve (3).

2. The supporting piece according to claim 1, wherein the inner wall surface of the hollow ring body (5) is provided with a dismounting part (53) for dismounting or mounting.

3. The supporting piece according to claim 2, wherein the dismounting part (53) is a first ring groove for clamping.

4. The supporting piece according to claim 3, wherein the flanges at both ends of the first ring groove in the axial direction are first chamfers (531) respectively.

5. The supporting piece according to claim 1, wherein the hollow ring body (5) or the conical surface (52) is made of a material with better abrasion resistance than the CRDM adaptor (2).

6. The supporting piece according to any one of claims 1-5, wherein the connecting part is an annular elastic clamping part (51) which extends axially from the first end face of the hollow ring body (5) and forms a step with the first end face.

7. The supporting piece according to claim 6, wherein the clamping part (51) is a lip structure.

8. The supporting piece according to claim 6, wherein at least two grooves (512) opening from the second end to the first end of the hollow ring body (5) are provided in the circumferential direction of the clamping part (51).

9. The supporting piece according to any one of claims 1-5, wherein the connecting part is a second chamfer (54) arranged on the inner peripheral edge of the first end face of the hollow ring body (5) for welding.

10. The supporting piece according to any one of claims 1-5, wherein the connecting part is a second ring groove (55) arranged on the inner wall surface of the first end of the hollow ring body (5) for welding.

11. The supporting piece according to any one of claims 1-5, wherein the connecting part is a third ring groove (56) arranged on the first end face of the hollow ring body (5) for welding.

12. The supporting piece according to claim 11, wherein a first step (57) is arranged on the inner wall surface of the first end of the hollow ring body (5), and the inner diameter of the first step (57) is larger than the inner diameter of the hollow ring body (5).

13. A CRDM adaptor apparatus, comprising a CRDM adaptor (2) and a supporting piece according to any one of claims 1-5;
wherein the hollow ring body (5) is embedded in the CRDM adaptor (2), and the CRDM adaptor (2) is provided with a connected part that is mutually matched with the connecting part.

14. The CRDM adaptor apparatus according to claim 13, wherein the inner wall surface of the top of the CRDM adaptor (2) is provided with a second step (21), and the inner diameter of the second step (21) is larger than the inner diameter of the CRDM adaptor (2);
the hollow ring body (5) is embedded in the CRDM adaptor (2), the outer diameter of the hollow ring body (5) is basically equal to the inner diameter of the second step (21), the inner diameter of the hollow ring body (5) is equal to inner diameter of the CRDM adaptor (2), and the end face of the first end of the hollow ring body (5) abuts against the plane of the second step (21);
the connected part is arranged on the second step (21) or on the inner wall surface where the inner diameter of the CRDM adaptor (2) is located.

15. A CRDM adaptor apparatus, comprising a CRDM adaptor (2) and a supporting piece according to any one of claims 6-8;
wherein the hollow ring body (5) and the clamping part (51) are embedded in the CRDM adaptor (2), and the CRDM adaptor (2) is provided with a fourth ring groove (22) engaging with the clamping part (51).

16. The CRDM adaptor apparatus according to claim 15, wherein the inner wall surface of the top of the CRDM adaptor (2) is provided with a second step (21), and the inner diameter of the second step (21) is larger than the inner diameter of the CRDM adaptor (2);
the hollow ring body (5) is embedded in the CRDM adaptor (2), the outer diameter of the hollow ring body (5) is basically equal to the inner diameter at the second step (21), the end face of the first end of the hollow ring body (5) abuts against the plane of the second step (21), and the inner diameter of the clamping part (51) is equal to the inner diameter of the CRDM adaptor (2);
the fourth ring groove (22) is arranged on the inner wall surface where the inner diameter of the CRDM adaptor (2) is located.

17. The adaptor apparatus according to claim 15, wherein the outer diameter of the lip (511) of the clamping part (51) is larger than the outer diameter of the flange of the fourth ring groove (22).

18. A CRDM adaptor apparatus, comprising a CRDM adaptor (2) and the supporting piece according to claim 9;
wherein the hollow ring body (5) is embedded in the CRDM adaptor (2), and the CRDM adaptor (2) is provided with a third chamfer (23), and the third chamfer (23) and the second chamfer (54) are used for welding.

19. The adaptor apparatus according to claim 18, wherein the inner wall surface of the top of the adaptor (2) is provided with a second step (21), and the inner diameter of the second step (21) is larger than the inner diameter of the adaptor (2);
the hollow ring body (5) is embedded in the adaptor (2), the outer diameter of the hollow ring body (5) is basically equal to the inner diameter of the second step (21), the inner diameter of the hollow ring body (5) is equal to the inner diameter of the adaptor (2), and the end face of the first end of the hollow ring body (5) abuts against the plane of the second step (21);
the third chamfer (23) is arranged at the edge of the second step (21).

20. A CRDM adaptor apparatus, comprising a CRDM adaptor (2) and the supporting piece according to claim 10;
wherein the hollow ring body (5) is embedded in the CRDM adaptor (2), and the CRDM adaptor (2) is provided with a fifth ring groove (24), and the fifth ring groove (24) and the second ring groove (55) are used for welding.

21. The adaptor apparatus according to claim 20, wherein the inner wall surface of the top of the adaptor (2) is provided with a second step (21), and the inner diameter of the second step (21) is larger than the inner diameter of the adaptor (2);
the hollow ring body (5) is embedded in the adaptor (2), the outer diameter of the hollow ring body (5) is basically equal to the inner diameter of the second step (21), the inner diameter of the hollow ring body (5) is equal to the inner diameter of the adaptor (2), and the end face of the first end of the hollow ring body (5) abuts against the plane of the second step (21);
the fifth ring groove (24) is arranged on the inner wall surface where the inner diameter of the adaptor (2) is located.

22. A CRDM adaptor apparatus, comprising a CRDM adaptor (2) and a supporting piece according to claim 11 or 12;
wherein the hollow ring body (5) is embedded in the CRDM adaptor (2), and the CRDM adaptor (2) is provided with a sixth ring groove (25) corresponding to the third ring groove (56), and the sixth ring groove (25) and the third ring groove (56) are used for welding.

23. The adaptor apparatus according to claim 22, wherein the inner wall surface of the top of the adaptor (2) is provided with a second step (21), and the inner diameter of the second step (21) is larger than the inner diameter of the adaptor (2);
the hollow ring body (5) is embedded in the adaptor (2), the outer diameter of the hollow ring body (5) is basically equal to the inner diameter of the second step (21), the inner diameter of the hollow ring body (5) is equal to the inner diameter of the adaptor (2), and the end face of the first end of the hollow ring body (5) abuts against the plane of the second step (21);
the sixth ring groove (25) is arranged on the plane of the second step (21).

24. The adaptor apparatus according to claim 23, wherein a third step (26) is arranged on the inner wall surface where the inner diameter of the adaptor (2) is located, and the third step (26) and the first step (57) on the inner wall surface of the first end of the hollow ring body (5) form a seventh ring groove;
the inner diameter of the seventh ring groove is larger than the inner diameter of the adaptor (2).
